(19) Europäisches Patentamt / European Patent Office / Office européen des brevets

(11) **EP 1 130 312 B1**

(12) **EUROPÄISCHE PATENTSCHRIFT**

(45) Veröffentlichungstag und Bekanntmachung des Hinweises auf die Patenterteilung:
**31.05.2017** **Patentblatt 2017/22**

(51) Int Cl.:
*F21S 8/00* *(2006.01)*      *F21V 5/02* *(2006.01)*
*G02B 6/00* *(2006.01)*      *F21W 131/402* *(2006.01)*

(21) Anmeldenummer: **01105268.5**

(22) Anmeldetag: **05.03.2001**

(54) **Leuchte mit einer um einen Mittelpunkt symmetrisch angeordneten Lichtaustrittsfläche, insbesondere Rundleuchte**

Luminaire having an around a point symmetrical light emitting surface, in particular of round shape

Luminaire comprenant une surface d'émission de la lumière avec un centre de symétrie, notamment de forme circulaire

(84) Benannte Vertragsstaaten:
**AT BE CH CY DE DK ES FI FR GB GR IE IT LI LU MC NL PT SE TR**
Benannte Erstreckungsstaaten:
**SI**

(30) Priorität: **03.03.2000   DE 10010470**

(43) Veröffentlichungstag der Anmeldung:
**05.09.2001   Patentblatt 2001/36**

(73) Patentinhaber: **Siteco Beleuchtungstechnik GmbH**
**83301 Traunreut (DE)**

(72) Erfinder:
• **Leibig, Joachim**
  **83374 Traunwalchen (DE)**
• **Belloni, Paola**
  **83278 Traunstein (DE)**
• **Prodell, Peter**
  **83308 Trostberg (DE)**

(74) Vertreter: **Schohe, Stefan et al**
**Boehmert & Boehmert**
**Anwaltspartnerschaft mbB**
**Patentanwälte Rechtsanwälte**
**Pettenkoferstrasse 20-22**
**80336 München (DE)**

(56) Entgegenhaltungen:
**EP-A- 0 496 921      WO-A-00/11399**
**DE-A1- 19 961 491     US-A- 5 046 805**

**Beschreibung**

Die Erfindung betrifft eine Leuchte zur Beleuchtung von Innenräumen, welche einen Hohllichtleiter mit mindestens einem Hohlraum aufweist, in den Licht einer oder mehrerer Lichtquellen eingekoppelt wird und über mindestens eine Lichtauskoppeleinrichtung zum Austritt an einer Lichtaustrittsfläche der Leuchte ausgekoppelt wird, wobei die Lichtauskoppeleinrichtung aus einem lichtdurchlässigen Material besteht und eine oder mehrere Grenzflächen zwischen diesem Material und einem Medium mit geringerem Brechungsindex aufweist, die mit einer lichtbrechenden Struktur ausgebildet sind, und der Lichtauskoppeleinrichtung gegenüberliegend eine reflektierende, den Hohlraum begrenzende Wand vorgesehen ist, deren Abstand von der Lichtauskoppeleinrichtung, ausgehend von der Stelle der Lichteinkopplung von der Lampe, zumindest über einen Teilabschnitt abnimmt.

Eine Leuchte dieser Art ist aus US-PS 5 863 114 bekannt. Bei dieser bekannten Leuchte sind zur Lichtauskopplung Prismen mit einem dreieckigen Querschnitt vorgesehen, deren Prismenwinkel 90° oder weniger beträgt. Wenn der Prismenwinkel in dieser Weise gewählt wird, wird Licht, das im wesentlichen senkrecht auf die Platte einfällt, unmittelbar zurückreflektiert.

Während diese Leuchte für allgemeine Beleuchtungszwecke durchaus geeignet sein mag, ist sie in Anwendungsfällen, in denen eine Abschirmung gefordert wird, wie dies bei vielen Innenraumleuchten der Fall ist, nicht ohne weiteres geeignet. Geltende Normvorschriften bzw. Normvorschläge für Bildschirmarbeitsplätze fordern beispielsweise, daß die mittlere Leuchtdichte an der Lichtaustrittsfläche in mehreren Raumebenen oberhalb eines Grenzwinkels unter einen vorbestimmten Grenzwert fällt. Die bei der US-PS 5 863 114 verwendeten Prismen erzeugen keine oder nur eine unbefriedigende Abschirmung. Daher wären bei der dort beschriebenen Leuchte zusätzliche Abschirmmaßnahmen, beispielsweise in der Form von Blenden, Rastern oder dgl. notwendig.

WO 00/11399 offenbart eine Leuchte mit einem Lichtleitelement. Das Lichtleitelement kann aus einem durchgängig transparenten Material hergestellt sein und im Querschnitt keilförmig gebildet sein, wobei das Leuchtmittel an der Stirnseite der Keilform angeordnet ist. Gemäß einem alternativen Beispiel in dieser Druckschrift ist auch die Verwendung eines hohlzylinderförmigen Lichtleitelements offenbart, in den Licht einer ringförmigen Lichtquelle eingekoppelt wird. Auf der Lichtaustrittsseite der Leuchte ist ein Lichtstreukörper vorgesehen, der eine lichtbrechende Profilierung aufweist. Diese kann auch direkt an der Lichtaustrittsfläche des Lichtleitkörpers vorgesehen sein. Die Keilform des Lichtleitelements sorgt für eine Querentblendung der Leuchte.

EP 0 496 921 A1 offenbart eine Leuchte, insbesondere eine Langfeldleuchte, mit einem sich längs erstreckenden röhrenförmigen Leuchtmittel, welches symmetrisch in einem Reflektor angeordnet ist. Die Lichtaustrittsseite des Reflektors ist mit einer transparenten Abdeckung versehen, die auf der zum Leuchtmittel gewandten Seite wenigstens in Teilabschnitten eine Prismenstruktur aufweist.

US 5 046 805 offenbart eine Vorrichtung mit einem sich verjüngenden optischen Lichtleiter zur gleichmäßigen Lichtverteilung. Gemäß einer Ausführungsform ist eine Lichtquelle zwischen einem rückseitigen Reflektor und einer als Modifizierer bezeichneten Lichtauskoppeleinrichtung vorgesehen. Der Modifizierer, welcher aus Glas oder Kunststoff gebildet ist, weist Erhöhungen und Vertiefungen auf. Der Modifizierer gibt das Licht auf die Lichtaustrittsseite diffus, d.h. gleichmäßig in alle Richtungen verteilt, ab.

Es ist die Aufgabe der Erfindung, eine Leuchte der eingangs beschriebenen Art, speziell in der Form einer Rundleuchte, eines Downlights oder dgl., zur Verfügung zu stellen, welche ohne zusätzliche Maßnahmen eine Abschirmung des abgestrahlten Lichts erzeugt.

Erfindungsgemäß wird diese Aufgabe gelöst durch eine Leuchte zur Beleuchtung von Innenräumen mit einem nicht viereckigen Gehäuse und/oder einer nicht viereckigen Lichtaustrittsfläche, insbesondere Rundleuchte oder Downlight, welche mindestens einen Hohllichtleiter mit einem Hohlraum aufweist, in den Licht einer oder mehrerer Lichtquellen eingekoppelt wird und über mindestens eine Lichtauskoppeleinrichtung zum Austritt an einer Lichtaustrittsfläche der Leuchte ausgekoppelt wird, wobei die Lichtauskoppeleinrichtung aus einem lichtdurchlässigen Material besteht und eine oder mehrere Grenzflächen zwischen diesem Material und einem Medium mit geringerem Brechungsindex, z.B. Luft, aufweist, die mit einer lichtbrechenden Struktur ausgebildet sind, und der Lichtauskoppeleinrichtung gegenüberliegend eine reflektierende, den Hohlraum begrenzende Wand vorgesehen ist, deren Abstand von der Lichtauskoppeleinrichtung, ausgehend von der Stelle der Lichteinkopplung von einer Lichtquelle, zumindest über einen Teilabschnitt, z.B. in radialer Richtung, abnimmt, wobei die lichtbrechende Struktur bzw. die lichtbrechenden Strukturen eine Lichtauskopplung in einer oder mehreren Flächen senkrecht zu der Lichtaustrittsfläche der Leuchte oberhalb eines Grenzwinkels zu einer Senkrechten zu der Lichtaustrittsfläche im wesentlichen verhindern und dadurch eine Abschirmung in dieser Fläche erzeugen, wobei eine Lichtquelle zumindest teilweise in dem Hohlraum aufgenommen ist.

Die Erfindung betrifft insbesondere, aber nicht ausschließlich solche Leuchten, welche von Leuchten verschieden sind, die in der EP 11 206 00 A1 beschrieben sind, insbesondere solche Leuchten, die von Leuchten mit mindestens einem Lichtleiter verschieden sind, in den von einer oder mehreren Lampen Licht über eine oder mehrere Lichteinkoppelseiten eingekoppelt wird und der mindestens eine von den Lichteinkoppelseiten verschiedene Lichtauskoppelseite mit einer Lichtauskoppelfläche besitzt, über welche Licht ausgekoppelt wird, wobei zumindest an einer Lichtauskoppelseite eine Struktur vorgesehen ist, welche eine Abschirmung des über diese Lichtauskoppelseite austretenden Lichts bewirkt, welche dadurch gekennzeichnet ist, daß die Struktur aus Licht transmittierenden Elementen besteht oder diese aufweist, die jeweils bezüglich einer Linie parallel zu der Lichtauskoppelfläche translationsinvariant sind, derart, daß sie entlang dieser Linie einen konstanten Querschnitt besitzen, wobei diese Elemente in der Richtung senkrecht zu dieser Linie im Querschnitt eine Breite besitzen, welche, bezogen auf eine Richtung senkrecht zu der Lichtauskoppelseite, von der dem Lichtleiter zugewandten Seite zu der von dem Lichtleiter abgewandten Seite zunimmt. Die Erfindung betrifft also insbesondere solche Leuchten, bei denen das Licht nicht über eine Seite eingekoppelt wird oder bei denen der Querschnitt der Licht transmittierenden Elemente, bezogen auf eine Richtung senkrecht zu der Lichtauskoppelseite, von der dem Lichtleiter zugewandten Seite zu der von dem Lichtleiter abgewandten Seite nicht zunimmt.

Das Gehäuse und/oder die Lichtaustrittsfläche kann insbesondere rund, elliptisch oder polygonförmig sein. Auch eine Leuchte mit einem dreieckigen Gehäuse und/oder einer dreieckigen Lichtaustrittsfläche sind möglich.

Im Regelfall wird das Licht der Lampe zumindest teilweise direkt in den Hohlraum eingestrahlt, so daß sich der erwähnte Abstand in der Richtung weg von der Lampe verringert. Die besagte, der Lichtauskoppeleinrichtung gegenüberliegende Wand des Hohllichtleiters ist gemäß einer Ausführungsform der Erfindung die Dachwand des Hohllichtleiters bzw. des Hohlraums, wobei in diesem Fall die Höhe des Hohlraums von der Stelle der Lichteinkopplung in radialer Richtung abnimmt.

Gemäß einer vorteilhaften Ausführungsform der Erfindung wird an zwei einander gegenüberliegenden Stellen Licht von einer Lampe, beispielsweise einer Ringlampe, oder von zwei einander gegenüberliegenden Lampen eingekoppelt und die Wand ist zwischen diesen Stellen soweit heruntergezogen, daß eine direkte Lichteinstrahlung von der einen Lampe bzw. dem einen Lampenabschnitt und dem zugehörigen Einkoppelreflektor auf die gegenüberliegende Lampe bzw. den gegenüberliegenden Lampenabschnitt vermieden oder zumindest reduziert wird.

Die Erfindung kann vorsehen, daß die lichtbrechende Struktur linienförmige lichtbrechende Strukturelemente aufweist oder aus diesen besteht, welche Seitenwände im wesentlichen parallel zu der Linienrichtung aufweisen, die an dem freien Ende der Strukturelemente einen Winkel einschließen, der größer als 90° ist, vorzugsweise in einem Bereich von 90° bis 130° liegt und insbesondere gemäß einer Ausführungsform der Erfindung in einem Bereich von 110° bis 128° liegen kann. Die vorangehend angegebenen Winkelbereiche von 90° bis 130° bzw. 110° bis 128° sind besonders für einen Brechungsindex von ungefähr 1,49 bevorzugt, können jedoch auch bei Materialien mit einem anderen Brechungsindex verwendet werden, der nicht allzu sehr von 1,49 verschieden ist. Dies gilt für die gängigen Materialien, wie Polycarbonat oder Polyester. Grundsätzlich können für von 1,49 verschiedene Brechungsindizes die bevorzugten Winkelbereiche verschieden sein, wobei sich diese bevorzugten Winkelbereiche für diese Brechungsindizes dadurch ermitteln lassen, daß die gleichen Abschirmwinkel für einen vorgegebenen Grenzwert der Leuchtdichte erzielt werden wie in dem Winkelbereich von 90° bis 130° bzw. 110° bis 128° bei einem Brechungsindex von 1,49. Grundsätzlich sollte gemäß den bevorzugten Ausführungsformen dieser Winkel jedoch, unabhängig vom Brechungsindex, größer als 90° sein. Vorzugsweise ist dieser Winkel bei allen Strukturelementen gleich, die im übrigen auch alle die gleiche Querschnittsform und ggf. auch identische Abmessungen haben können.

Erfindungsgemäß kann vorgesehen sein, daß für ein oder mehrere der Strukturenelemente, vorzugsweise für alle Strukturelemente, die Linie, entlang der sich das Strukturelement erstreckt, konform und vorzugsweise parallel zu der Umfangslinie ist, also z.B. kreisförmig bei einer kreisförmigen Lichtaustrittsfläche, sechseckig bei einer sechseckigen Lichtaustrittsfläche usw.

Eine Abschirmung der Leuchte bedeutet, daß in einer Ebene senkrecht zu der Lichtaustrittsfläche die mittlere Leuchtdichte oberhalb eines Grenzwinkels (Abschirmwinkel) zu einer Senkrechten zu der Lichtaustrittsfläche in dieser Ebene unterhalb eines vorbestimmten Grenzwertes liegt.

Der Grenzwert der Leuchtdichte kann entsprechend den geltenden Normen bzw. Normvorschlägen bei 200 cd/m$^2$, 500 cd/m$^2$ oder 1000 cd/m$^2$ liegen. Der Abschirmwinkel liegt bei gängigen Anwendungen im Bereich von mehr als 45°, bevorzugt in einem Bereich von 45° bis 75°, insbesondere 50° bis 65° und besonders bevorzugt 55° bis 65°. Die Abschirmung kann auch in einem raumbezogenen Ebenensystem vorgesehen sein, z.B. dem C-Ebenensystem gemäß DIN 5032-1.

Die lichtbrechenden Elemente haben gemäß der bevorzugten Ausführungsform der Erfindung entlang der Linienrichtung einen konstanten Querschnitt, der insbesondere die Form eines Dreiecks annehmen kann. Die Seitenwände der Elemente müssen jedoch nicht geradlinig sein, sondern können auch gekrümmt sein. Während gemäß einer bevorzugten Ausführungsform die Seitenwände an dem freien Ende der Strukturelemente direkt aneinander anschließen, kann auch vorgesehen sein, daß das freie Ende der Strukturelemente abgeflacht ist und die Seitenwände durch eine ebene oder gekrümmte Fläche verbunden sind. Im Fall von ebenen Seitenflächen oder Seitenflächen mit einem ebenen Abschnitt an dem freien Ende ist der vorangehend genannte Winkel dann durch die imaginäre Verlängerung der ebenen Seitenwände bzw. der ebenen Abschnitte der Seitenwände bestimmt. Im Falle von gekrümmten Seitenwänden kann der vorangehend erwähnte Winkel dem Winkel eines Dreiecks entsprechen, dem der Querschnitt der lichtbrechenden Elemente optimal, d.h. mit möglichst geringer Flächenabweichung zwischen der Fläche des Dreiecks und der Querschnittsfläche des lichtbrechenden Elements, einbeschrieben ist. Im Falle einer konvexen, d.h. nach außen gekrümmten Seitenwand würde dieser Winkel durch den Schnittwinkel von zwei Tangenten gebildet, die an die Seitenlinien des Querschnitts des lichtbrechenden Elements angelegt werden, während im Falle einer konkaven, d.h. nach innen gekrümmten Seitenwand, dieser Winkel durch zwei Geraden festgelegt würde, die jeweils durch den Kopfpunkt und den Fußpunkt einer Seitenlinie des Querschnitts, d.h. einer der Seitenwand im Querschnitt entsprechenden Linie, gelegt sind.

Ähnliche optische Eigenschaften lassen sich auch erreichen, wenn nur der Teil des Querschnitts an dem freien Ende der Prismen entlang der Linienrichtung konstant ist und, für die obengenannte Ausführungsform, einen über der Linie konstanten Winkel an dem freien Ende definiert. Dabei kann die Grundform des Querschnitts erhalten bleiben. Beispielsweise kann bei einem dreieckförmigen Querschnitt bei gleicher Grundform sich die Höhe des Dreiecks entlang der Linie ändern. Alternativ oder ergänzend kann sich jedoch auch die Figur, die der Querschnitt darstellt, entlang der Linie auf eine Teilfigur reduzieren, beispielsweise von einem Fünfeck zu einem Dreieck, welches dem Bereich an der Spitze des Fünfecks entspricht.

Gemäß einer bevorzugten Ausführungsform der Erfindung bestehen die lichtbrechenden Elemente aus einem Körper, der durch Verschieben einer Querschnittsfläche, beispielsweise eines Dreiecks, entlang einer Leitkurve erzeugt wird. Gemäß einer besonderen Ausführungsform kann diese Leitkurve in sich geschlossen sein, so daß sie einen Kreis, eine Ellipse, ein Polygon oder dgl. bildet. Dementsprechend bilden dann auch die lichtbrechenden Elemente an der Grenzfläche Kreise, Polygone, Ellipsen oder dgl. Insbesondere kann die besagte Leitkurve konform zu der Umfangslinie der Lichtaustrittsfläche sein, also z.B. eine Kreislinie sein, wenn die Lichtaustrittsfläche im Kreis ist, usw. Erfindungsgemäß kann auch vorgesehen sein, daß die Leitkurve eine gekrümmte offene Linie ist, die insbesondere flächenfüllend sein kann, beispielsweise eine Spirale.

Gemäß einer besonderen Ausführungsform der Erfindung ist zumindest eine Struktur mit kreisförmigen lichtbrechenden Strukturelementen ausgebildet.

Es kann insbesondere vorgesehen sein, daß in der Lichtauskoppeleinrichtung zumindest zwei lichtbrechende Strukturen mit linienförmigen Strukturelementen vorgesehen sind, wobei die Linien, welche die Geometrie der ersten Struktur definieren, mit den Linien, welche die Geometrie der zweiten Struktur definieren, einen nicht verschwindenden Winkel einschließen und vorzugsweise senkrecht auf diesen stehen. Insoweit die Strukturen nicht in parallelen Flächen ausgebildet sind, schneiden sich die Linien in einer Projektion der ersten auf die zweite Struktur entlang der Richtung des Lichtwegs zwischen den Strukturen.

Gemäß einer besonderen Ausführungsform der Erfindung ist eine der Strukturen aus kreisförmigen lichtbrechenden Elementen aufgebaut, die konzentrisch zu einem Zentrum der Struktur, in der Regel konzentrisch zu der Lichtaustrittsfläche, angeordnet sind, während die zweite Struktur radial sich von dem Zentrum erstreckende geradlinige lichtbrechende Elemente aufweist, welche auf den kreisförmigen Elementen der ersten Struktur senkrecht stehen.

Die lichtbrechenden Strukturen lassen sich z.B. dadurch herstellen, daß eine Platte oder Folie aus einem gängigen lichtdurchlässigen Material, wie Glas, Polyester, Polystyrol, Polycarbonat oder Polymethylmethacrylat, auf einer Fläche entsprechend bearbeitet oder geformt wird. Alternativ kann auch eine Folie, welche die lichtbrechende Struktur enthält, auf eine solche Platte aufgeklebt oder auch ohne Trägerplatte eingesetzt werden. Wenn mehrere derartige Strukturen vorgesehen sind, werden vorzugsweise zwei übereinander geschichtete Platten verwendet, die jeweils an einer Grundseite mit einer lichtbrechenden Struktur wie vorangehend erwähnt versehen sind. Die lichtbrechenden Strukturen in den verschiedenen Platten können in dieselbe Richtung weisen oder in entgegengesetzte Richtungen weisen und, in Bezug auf den Hohlraum des Hohllichtleiters, zu diesem hinweisen oder von diesem wegweisen.

Alternativ kann vorgesehen sein, daß auf zwei einander gegenüberliegenden Seiten einer Platte jeweils eine lichtbrechende Struktur ausgebildet oder aufgebracht ist, wobei die Linien der beiden Strukturen sich in einer Projektion schneiden und vorzugsweise senkrecht aufeinander stehen.

Die Platten werden in konventioneller Weise durch geeignete Mittel an dem Gehäuse der Leuchte gehalten. Gemäß einer Ausführungsform der Erfindung bildet der Hohllichtleiter der Leuchte einen nach unten offenen Kasten, der durch die besagten Platten auf seiner Unterseite verschlossen wird.

Gemäß einer Ausführungsform ist die Leuchte so eingerichtet, daß das Licht von einer oder mehreren Lichtquellen von der radialen Außenseite des Hohlraums aus eingekoppelt wird.

Die radial äußere Seite des Hohllichtleiters ist vorzugsweise offen. Den Hohllichtleiter von außen umschließend ist gemäß einer Ausführungsform der Erfindung eine Ringlampe angeordnet, welche radial von außen Licht in den Hohlraum des Hohllichtleiters einstrahlt. Anstelle einer Ringlampe können jedoch auch mehrere über den Umfang des Hohllichtleiters verteilte Lichtquellen vorgesehen sein. Statt einer konventionellen Lampe können auch Leuchtdioden, photolumineszente Folien oder dgl. als Lichtquelle verwendet werden.

Es kann alternativ oder ergänzend vorgesehen sein, daß der Hohllichtleiter einen radial inneren Rand besitzt und eine oder mehrere Lichtquellen entlang des radial inneren Rands angeordnet sind, deren Licht in den Hohllichtleiter eingekoppelt wird.

Die Erfindung kann auch vorsehen, daß an einen inneren radialen Rand eines ersten Hohllichtleiters anschließend ein zweiter, vorzugsweise konzentrischer Hohllichtleiter vorgesehen ist, wobei eine oder mehrere Lichtquellen zwischen dem inneren radialen Rand des ersten Hohllichtleiters und dem äußeren radialen Rand des zweiten Hohllichtleiters angeordnet sind.

Es kann auch vorgesehen sein, daß eine Lichtquelle sich durch eine Öffnung in einer Wand des Hohllichtleiters, insbesondere durch eine Öffnung in der Dachwand, in den Hohlraum des Hohllichtleiters erstreckt.

Die Erfindung kann vorsehen, daß ein oder mehrere elektrische und/oder mechanische Komponenten zumindest teilweise in einem Raumbereich außerhalb des Hohllichtleiters angeordnet sind, in dem die besagte Wand des Hohllichtleiters einen gegenüber einer Lichteinkoppelstelle verringerten Abstand von der Lichtauskoppeleinrichtung besitzt und der zwischen der Lichtauskoppeleinrichtung und einer Ebene liegt, deren Abstand von der Lichtauskoppeleinrichtung dem maximalen Abstand der besagten Wand von der Lichtauskoppeleinrichtung entspricht.

Gemäß einer besonderen Ausführungsform der Erfindung ist vorgesehen, daß eine Wand des Gehäuses derjenigen Wand des Hohllichtleiters gegenüberliegt, welche ihrerseits der Lichtaustrittsfläche gegenüberliegt, und mit dieser einen Raumbereich außerhalb des Hohllichtleiters festlegt, in dem ein oder mehrere elektrische und/oder mechanische Komponenten angeordnet sind, die sich zumindest teilweise in den Abschnitt des Raumbereichs erstrecken, in dem die besagte Wand des Hohllichtleiters einen gegenüber der Lichteinkoppelstelle verringerten Abstand von der Lichtauskoppeleinrichtung besitzt.

Die Erfindung kann in einer Abwandlung dieser Ausführungsform auch vorsehen, daß statt einer Gehäusewand ein Bügel vorgesehen ist, an dem die elektrischen und/oder mechanischen Komponenten so befestigt sind, daß sie sich in den Bereich erstrecken, in dem die Wand des Hohllichtleiters einen gegenüber der Lichteinkoppelstelle verringerten Abstand von der Lichtauskoppeleinrichtung besitzt.

Bei diesen Ausführungsformen der Erfindung wird in vorteilhafter Weise ausgenutzt, daß sich durch die Verringerung des Abstands der besagten Wand von der Lichtauskoppeleinrichtung ein zusätzliches Volumen in dem Leuchtengehäuse ergibt. Dieser zusätzliche Raum wird für die Unterbringung von Komponenten der Leuchte genutzt, so daß die Bauhöhe insgesamt verringert werden kann. Der Abstand der Gehäusewand von der besagten Wand des Hohllichtleiters kann dabei in derselben Richtung und in demselben Bereich zunehmen, in dem der Abstand der Wand des Hohllichtleiters von der Lichtauskoppeleinrichtung abnimmt.

Die Erfindung kann auch vorsehen, daß die Leuchte eine Einrichtung zur Abgabe eines Lichtanteils zur indirekten Beleuchtung aufweist. Hierfür kann eine zweite Lichtauskoppeleinrichtung, insbesondere gegenüber der ersten Lichtauskoppelvorrichtung, vorgesehen sein, welche Licht aus dem Hohllichtleiter auskoppelt. Diese Lichtauskoppeleinrichtung kann, muß aber nicht eine lichtbrechende Struktur zur Lichtauskopplung aufweisen. Beispielsweise kann die der ersten Lichtauskoppeleinrichtung gegenüberliegende Wand teilweise reflektierend und teilweise lichtdurchlässig ausgebildet sein und/oder lichtdurchlässige und lichtundurchlässige Bereiche, beispielsweise in der Form einer Lochstruktur, aufweisen.

Die erfindungsgemäßen Leuchten können in verschiedener Form, beispielsweise als Downlight, Pendelleuchte, Einbau- oder Anbauleuchte, realisiert werden.

Weitere Merkmale der vorliegenden Erfindung ergeben sich aus der nachfolgenden Beschreibung von Ausführungsbeispielen der Erfindung anhand der beigefügten schematischen Zeichnungen.

Fig. 1    zeigt schematisch eine Ansicht eines erfindungsgemäßen Downlights von unten,

Fig. 2    zeigt einen Querschnitt durch den Hohllichtleiter der Leuchte gemäß Fig. 1 entsprechend der Linie II-II in Fig. 1,

Fig. 3    zeigt schematisch einen vergrößerten Ausschnitt aus einem radialen Querschnitt der Prismenplatten,

Fig. 4    zeigt schematisch die Struktur der zweiten Prismenplatte der Lichtauskoppeleinrichtung,

Fig. 5    zeigt den Hohllichtleiter einer Leuchte gemäß einer zweiten Ausführungsform der Erfindung,

Fig. 6    zeigt einen teilweisen Querschnitt durch eine dritte Ausführungsform einer erfindungsgemäßen Leuchte,

Fig. 7    zeigt eine Teilansicht der Leuchte gemäß Fig. 6 von unten,

Fig. 8    zeigt einen teilweisen Querschnitt einer vierten Ausführungsform einer erfindungsgemäßen Leuchte,

Fig. 9    zeigt eine Teilansicht der Leuchte gemäß Fig. 8 von unten,

Fig. 10    zeigt einen Querschnitt einer fünften Ausführungsform einer erfindungsgemäßen Leuchte in der Form einer Deckeneinbauleuchte,

Fig. 11    zeigt einen Querschnitt einer sechsten Ausführungsform der erfindungsgemäßen Leuchte in der Form einer Pendelleuchte.

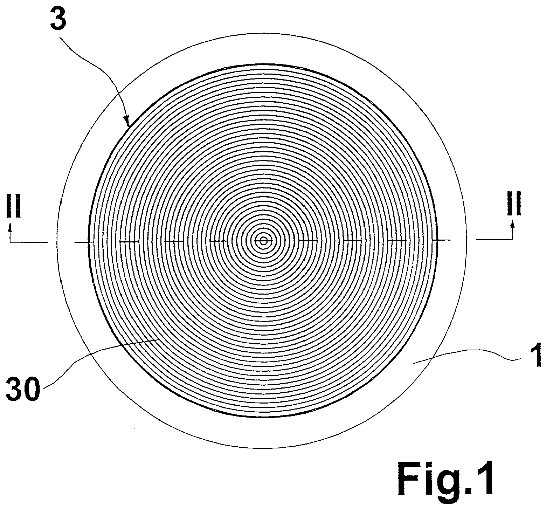

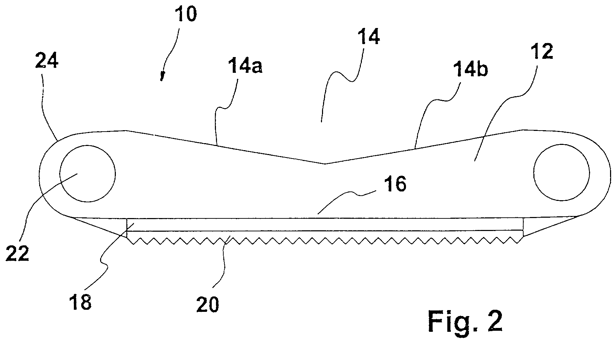

In Fig. 1 ist schematisch eine Ausführungsform einer erfindungsgemäßen Leuchte in der Form eines Downlights dargestellt. Dieses Downlight besitzt ein im wesentlichen kreiszylinderförmiges Gehäuse 1 sowie eine konzentrisch zu diesem Gehäuse angeordnete Lichtaustrittsfläche 3. Diese Lichtaustrittsfläche 3 ist gleichzeitig die Lichtauskoppelfläche eines Hohllichtleiters 10, der in dem Gehäuse 1 angeordnet ist und der in einem Querschnitt gemäß der Linie II-II der Fig. 1 in Fig. 2 schematisch dargestellt ist.

Der Hohllichtleiter 10 weist einen Hohlraum 12 auf, der von einer Dachwand 14 mit Wandabschnitten 14a und 14b und einer Lichtauskoppeleinrichtung 16 begrenzt wird, die aus Prismenplatten 18 und 20 besteht. Auf der radial äußeren Seite ist der Hohlraum 12 offen. An dieser offenen Seite wird über eine Ringlampe 22 und einen der Ringlampe 22 zugeordneten Einkoppelreflektor 24 Licht in den Hohlraum 12 eingekoppelt. Die Dachwand 14 ist reflektierend ausgebildet und reflektiert auf sie einfallendes Licht zu der Lichtauskoppeleinrichtung 16.

Das Licht von der Lampe 22 bzw. dem Einkoppelreflektor 24 fällt zu einem Teil direkt auf die Platte 18 ein. Ein Teil dieses Lichts tritt durch die Platten 18 und 20 hindurch und an der Lichtaustrittsfläche 3 aus. Ein weiterer Teil dieses Lichts wird an der Platte 18 reflektiert. Die Dachwand 14 reflektiert das auf sie direkt von der Lampe 22 bzw. dem Einkoppelreflektor 24 einfallende Licht sowie das zu ihr von der Platte 18 zurückreflektierte Licht nach unten zu der Prismenplatte 18.

Der Grad der Lichtauskopplung an der Prismenplatte 18 hängt unter anderem von dem Einfallswinkel der einfallenden Lichtstrahlen ab. Es hat sich gezeigt, daß sich eine gleichmäßigere Lichtstärkeverteilungskurve der Leuchte erreichen läßt, wenn die reflektierende Dachwand zu der Lichtauskoppeleinrichtung geneigt ist und sich der Abstand zwischen der Lichtauskoppeleinrichtung und der Dachwand in Richtung weg von der Lampe verringert. Insbesondere wird dadurch die Lichtstärkeverteilungskurve im Bereich von 0° vergleichmäßigt und ein Minimum der Lichtstärkeverteilung in diesem Bereich vermieden oder abgeschwächt. Es hat sich weiterhin gezeigt, daß eine solche Gestaltung zu einer Verbesserung des Leuchtenwirkungsgrades führt. Aus diesem Grund ist die Dachwand 14 kegelförmig ausgebildet und weist im radialen Querschnitt zwei gerade, zueinander geneigte Abschnitte 14a und 14b auf, so daß die Höhe des Hohlraums 12 in der Mitte am kleinsten und an dem radial äußeren Rand am größten ist.

Die Prismenplatten 18 und 20 sind mit einer Struktur versehen, welche eine Lichtauskopplung oberhalb eines Grenzwinkels zu der Senkrechten zu der Lichtaustrittsfläche in bestimmten Ebenen im wesentlichen verhindert und dadurch eine Abschirmung, d.h. eine Absenkung der mittleren Leuchtdichte der Lichtaustrittsfläche unter einen Grenzwert, z.B. 200 cd/m$^2$, 500 cd/m$^2$ oder 1000 cd/m$^2$, erzeugt.

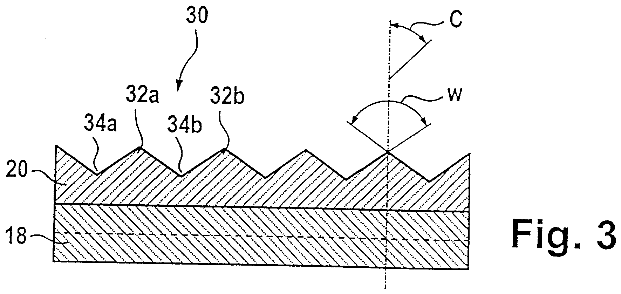

Die Prismenplatte 20 weist auf ihrer von dem Hohlraum 12 abgewandten Seite eine Struktur von kreisförmigen Prismen 30 auf (vgl. Fig. 1), die in einem radialen Querschnitt eine dreieckige Form besitzen, wie man anhand von Fig. 3 erkennen kann. Fig. 3 zeigt, daß die Prismen unmittelbar aneinander angrenzen, gleichmäßig voneinander beabstandete Grate 32a, 32b, ... (nachfolgend kollektiv mit 32 bezeichnet) aufweisen und durch gleichmäßig voneinander beabstandete Vertiefungen 34a, 34b, ... nachfolgend kollektiv mit 34 bezeichnet, voneinander getrennt sind. Die Vertiefungen 34 und die Grate 32 bilden auf der von dem Hohlraum 12 abgewandten Seite der Platte 20 kreisförmige konzentrische Linien, die in Fig. 1 schematisch dargestellt sind.

Die Abschirmung kann z.B. durch Totalreflexion in den Prismen erzeugt werden. Licht in den Prismen wird beim Einfall auf die Grenzfläche zu einem optisch dünneren Medium, z.B. Luft, vollständig in die Prismen zurückreflektiert, wenn der Einfallswinkel größer als der Winkel der Totalreflexion ist. Dementsprechend ist der Austrittswinkel, bezogen auf die Grenzflächen der Prismen, begrenzt. Die Seitenwände der Prismen zwischen den Graten 32 und den Vertiefungen 34 stehen jedoch schräg zu der Lichtaustrittsfläche, so daß die Begrenzung des Lichtaustrittswinkels durch den Grenzwinkel der Totalreflexion nicht notwendigerweise eine Abschirmung bedeutet. Ein mögliches Kriterium für eine Abschirmung läßt sich dadurch ableiten, daß für Strahlengänge in den Prismen bis zu einer vorgegebenen Höchstzahl k (z.B. k = 1, 2, 3 oder 4) von inneren Reflexionen in den Prismen vor einem Lichtaustritt aus der Struktur der Austrittswinkel bezüglich einer Senkrechten zu der Grundfläche der lichtbrechenden Struktur maximal gleich dem Abschirmwinkel ist. Andere Abschirmmechanismen und Abschirmkriterien können alternativ oder ergänzend auch verwendet werden.

Es hat sich gezeigt, daß für Prismen mit einem Querschnitt in der Form eines gleichschenkligen Dreiecks eine gute Abschirmung erreicht wird, wenn zwischen dem Abschirmwinkel C und dem Prismenwinkel w für eine Grenzfläche zu Luft die folgenden Relationen bestehen:

$$w/2 \leq C \qquad\qquad\qquad (1)$$

$$w \geq 2\,(2\,\arcsin(1/n) + 90)/3 \qquad\qquad\qquad (2)$$

$$\tan(w/2) \leq (n \sin(\arcsin(1/n) - 3\ w/2) + \cos(w/2)) \ / \ (n \cos(\arcsin(1/n) - 3\ w/2) +$$

$$\sin(w/2)), \tag{3}$$

wobei n der Brechungsindex der Platte 20 ist.

Der Prismenwinkel w liegt bei den derzeitig bevorzugten Ausführungsformen bei einem Brechungsindex von 1,49 im Bereich von 90° bis 130°, besonders bevorzugt im Bereich von 110° bis 128°.

Anstelle der in Fig. 3 dargestellten dreieckförmigen Prismen können auch andere Prismenformen verwendet werden.

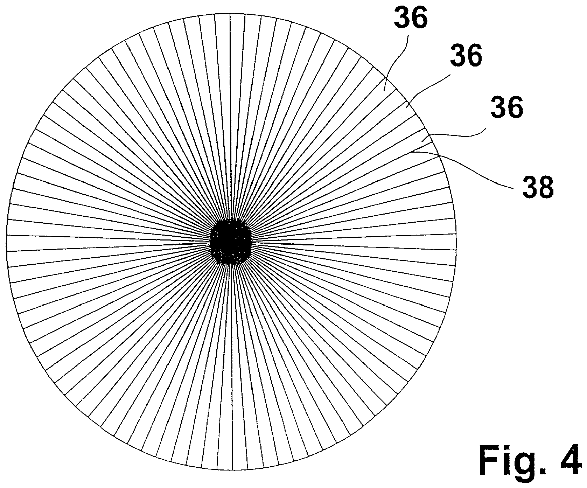

Die Prismenplatte 18 ist auf der von dem Hohlraum 12 abgewandten Seite mit einer Struktur von geradlinigen Prismen 36 versehen, die in einer Richtung senkrecht zu ihrer Längsrichtung einen dreieckförmigen Querschnitt mit einem Prismengrat aufweisen, bei dem zwei ebene Seitenflächen der Prismen aufeinander treffen, wie es in Fig. 3 für die Prismen 30 gezeigt ist. Wie in Fig. 4 gezeigt, erstrecken sich die Prismen 36 von dem Zentrum der Platte sternförmig radial nach außen. Man erkennt, daß die Prismengrate im Mittelpunkt aufeinanderstoßen. Der Prismenwinkel bleibt über die gesamte Länge der Prismen 36 konstant, so daß in der Richtung radial nach innen die Länge der Basis des dreieckigen Querschnitts und damit die Höhe des Dreiecks abnimmt. Die den Graten 38 entsprechende Längsrichtung der Prismen steht senkrecht auf den durch die Vertiefungen 34 und den Graten 32 gebildeten Linien der Platte 20. Die Prismen 36 erzeugen, wie die Prismen 30 der Prismenplatte 20, in der Richtung quer zu ihrer Längsrichtung eine Abschirmung. Die Prismenplatten 18 und 20 erzeugen daher zusammen eine Abschirmung in zueinander senkrechten Flächen, die senkrecht auf der Lichtaustrittsfläche 3 stehen, nämlich einmal Zylinderflächen, die konzentrisch zu der Lichtaustrittsfläche 3 sind, und zum anderen ebenen Flächen, welche sich durch den Mittelpunkt der Lichtaustrittsfläche 3 erstrecken. Auf diese Weise wird eine besonders gute Abschirmung erzeugt. Der Vollständigkeit halber sei erwähnt, daß bei dieser Anordnung eine Abschirmung nicht nur in den erwähnten zueinander senkrechten Flächen, sondern auch in dazwischen liegenden Flächen oder Ebenen erzeugt werden kann, wobei die Abschirmung in diesen Flächen geringer sein kann als in den Flächen senkrecht zu der jeweiligen Linienrichtung.

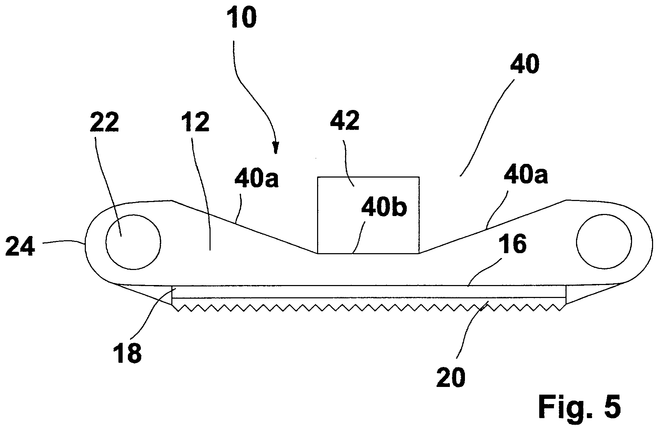

Fig. 5 zeigt eine Abwandlung der Ausführungsform gemäß dem vorangehend beschriebenen Beispiel, wobei gleiche Bestandteile mit gleichen Bezugszeichen versehen sind. Bei dieser Ausführungsform besteht die Dachwand 40 aus einem zu der Lichtauskoppeleinrichtung 16 geneigten ringförmigen Wandabschnitt 40a, der sich bis zum radial äußeren Rand des Hohllichtleiters 10 erstreckt und einem dazwischenliegenden waagrechten kreisförmigen Abschnitt 40b parallel zu den Platten 18 und 20. An der Dachwand 40 ist außerhalb des Hohllichtleiters 10 ein Vorschaltgerät 42 in dem Bereich des abgesenkten Wandabschnitts 40b angebracht. Das lichttechnische Prinzip entspricht demjenigen des Ausführungsbeispiels entsprechend Fig. 1 bis 4. Durch diese Anordnung wird der Leuchtenwirkungsgrad verbessert, da der einem Lampenabschnitt gegenüberliegende Einkoppelbereich durch den Konus, den die Wand 40 bildet, besser abgedeckt wird.

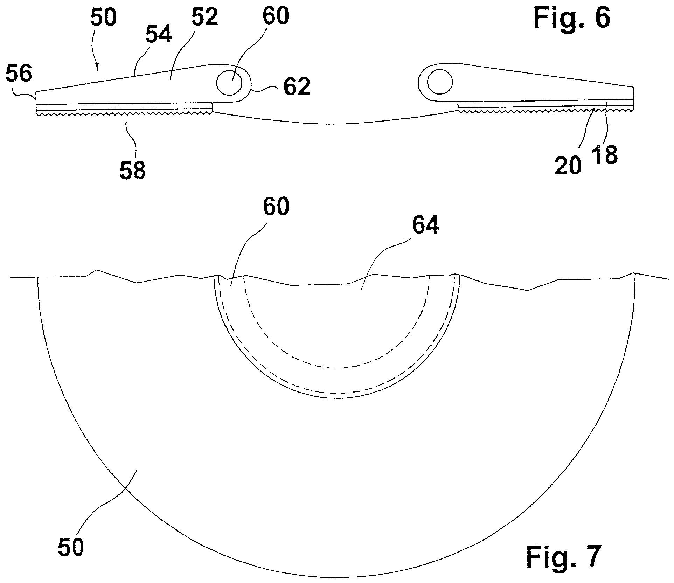

Fig. 6 zeigt eine dritte Ausführungsform einer erfindungsgemäßen Leuchte, die wieder ein Downlight sein kann, wobei nur für die Lichttechnik wesentliche Elemente dargestellt sind. Bei dieser Ausführungsform hat der Hohllichtleiter 50 eine Kreisringform. Der zugehörige Hohlraum 52 wird durch eine ebenfalls kreisringförmige Dachwand 54, eine radial äußere Seitenwand 56 und eine Lichtauskoppeleinrichtung 58 gebildet, wobei die Dachwand 54 und die Seitenwand 56 auf der Seite des Hohlraums 52 reflektierend ausgebildet sind. Die Dachwand 54 ist in einem radialen Querschnitt im wesentlichen gerade und zu der Lichtauskoppeleinrichtung 58 geneigt, so daß sich die Höhe des Hohlraums 52 zum radial äußeren Rand hin verringert. Am radial inneren Rand des Hohlraums 52 ist eine Ringlampe 60 mit einem zugehörigen Einkoppelreflektor 62 angeordnet, welche zusammen Licht in den Hohlraum 52 einkoppeln, das über die Lichtauskoppeleinrichtung 58 ausgekoppelt wird. Die Lichtauskoppeleinrichtung besteht wieder aus Prismenplatten 18 und 20, die wie vorangehend beschrieben ausgebildet sind. Die Prismenlinien der Platte 20 sind in Fig. 7 nicht dargestellt. Die Öffnung in der Mitte des Hohllichtleiters 50 kann durch eine Abdeckung 64 abgedeckt sein. Die Einkoppelreflektoren 62 und die Abdeckung 64 können teilweise lichtdurchlässig sein, so daß ein Teil des Lichts auch über die Abdeckung 64 austritt. Wenn die Leuchte insgesamt eine Kreisringform haben soll, kann die Abdeckung 64 natürlich auch wegfallen.

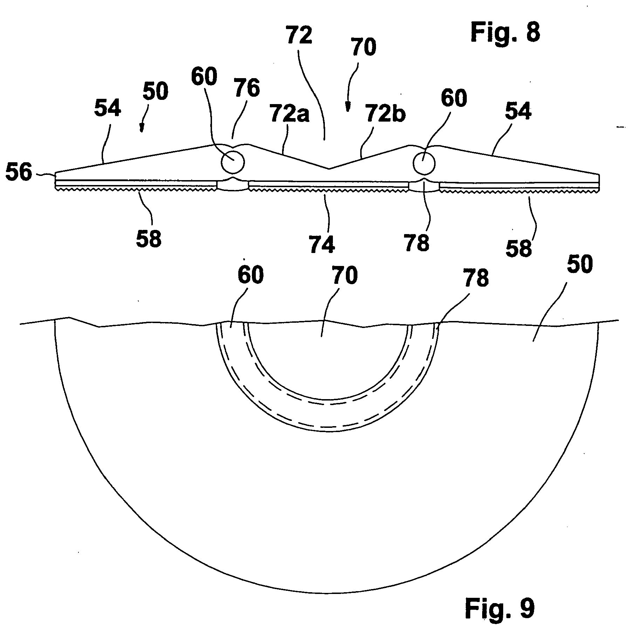

Fig. 8 und 9 zeigen eine Abwandlung der Ausführungsform gemäß Fig. 6 und 7, wobei gleiche Elemente mit den gleichen Bezugszeichen versehen sind. Bei dieser Ausführungsform ist in die innere Aussparung des kreisringförmigen Hohllichtleiters 50 ein weiterer Hohllichtleiter 70 mit einer kegelförmigen Dachwand 72, die im radialen Querschnitt zwei zueinander geneigte reflektierende Dachwandabschnitte 72a und 72b aufweist, gegenüber einer Lichtauskoppeleinrichtung 74 angeordnet. Die Ausbildung des Hohllichtleiters 70 entspricht derjenigen des Hohllichtleiters gemäß Fig. 1 bis 4. Die Ringlampe 60 ist zwischen der radial inneren Seite des Hohllichtleiters 50 und der radial äußeren Seite des Hohllichtleiters 70 angeordnet und koppelt Licht in beide Hohllichtleiter ein. Zur Verbesserung der Lichteinkopplung sind vogelschwingenförmige Reflektoren 76 und 78 oberhalb und unterhalb der Ringlampe 60 vorgesehen. Der untere Reflektor 78 dient außerdem als Abschirmung der Lampe 60 nach unten. Eine solche Abschirmung kann auch entfallen. Beispielsweise können die Lichtauskoppeleinrichtungen 58 und 74 der beiden Hohllichtleiter 50 und 70 durch zwei übereinanderliegende Prismenplatten gebildet werden, die beiden Hohllichtleitern gemeinsam sind.

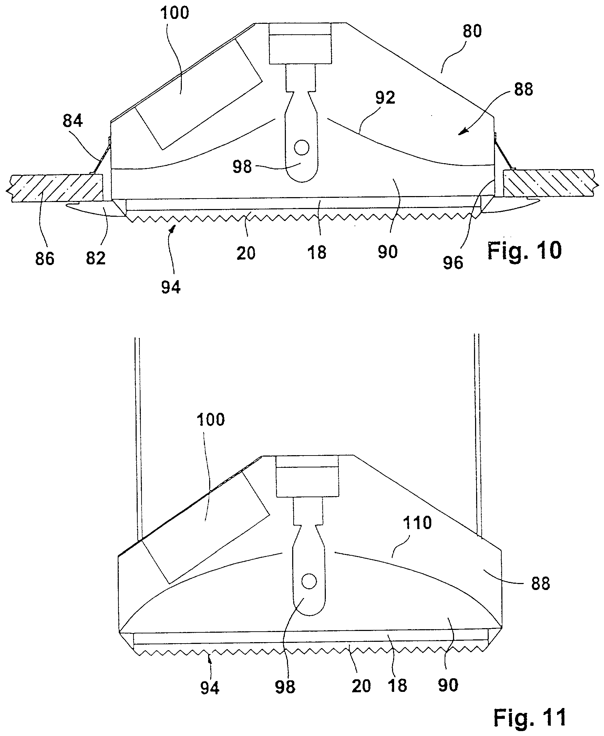

Erfindungsgemäß können anstelle von Ringlampen auch andere Lampentypen verwendet werden. Fig. 10 zeigt eine mögliche Ausführungsform der Erfindung für das Beispiel einer Einbauleuchte, wobei dieselbe Ausgestaltung auch für andere Leuchtentypen verwendet werden kann. Die Einbauleuchte gemäß Fig. 10 besitzt ein Gehäuse 80, das in konventioneller Weise mit einem Einbauring 82 sowie einer Befestigungseinrichtung 84 zum Befestigen an einer Decke 86 versehen ist. In dem Gehäuse 80 ist ein Hohllichtleiter 88 ausgebildet. Der Hohlraum 90 dieses Hohllichtleiters 88 wird durch eine kreisringförmige Dachwand 92, eine der Dachwand 92 gegenüberliegende.Lichtauskoppeleinrichtung 94 sowie durch einen Teil der Seitenwand des Gehäuses 80 gebildet, welcher eine Seitenwand 96 des Hohllichtleiters 88 bildet. Die Dachwand 92 und die Seitenwand 96 sind auf der dem Hohlraum 90 zugewandten Seite reflektierend ausgebildet. Durch eine zentrale Öffnung der Dachwand 92 ist eine Lampe 98 in den Hohlraum 90 eingerührt, so daß sie ihr Licht direkt in den Hohlraum 90 abgibt. Die Lampe 98 kann beispielsweise eine Halogenglühlampe, eine Hochdrucklampe mit Keramikbrenner oder dgl. sein. Im Idealfall hat die Lampe 98 die Eigenschaften einer punktförmigen Lichtquelle. Zusätzliche Reflektoren (nicht dargestellt) können der Lampe 98 zugeordnet sein, um die Lichteinstrahlung von der Lampe in den Hohlraum 90 zu optimieren. Der Dachreflektor ist bei diesem Ausführungsbeispiel zur Mitte hin (vom Hohlraum 90 aus gesehen) konvex gekrümmt, so daß die Höhe des Hohlraums 90 und damit des Hohllichtleiters 88 insgesamt in der Richtung radial nach außen, d.h. von der Lampe 98 weg, abnimmt. Die Lichtauskoppeleinrichtung 94 ist, wie bei den vorangehend beschriebenen Ausführungsbeispielen, durch zwei Prismenplatten 18 und 20 gebildet, wie sie vorangehend beschrieben wurden. Die lichttechnische Wirkungsweise des Hohllichtleiters und der Lichtauskoppeleinrichtung bei dieser Ausführungsform entspricht im wesentlichen derjenigen der vorangehenden Ausführungsformen und wird daher nicht noch einmal beschrieben. Die Anordung der Lampe 98 kann bei dieser Ausführungsform variieren. Sie kann, wie in Fig. 10 gezeigt, sich teilweise in den Hohlraum 90 hinein erstrecken, aber auch vollständig in dem Hohlraum 90 aufgenommen sein oder sich bis zu ihrem Fassungsende in dem Hohlraum 90 befinden.

Oberhalb der Dachwand 92 und vom Zentrum nach außen versetzt ist an dem Gehäuse 80 ein Vorschaltgerät 100 angebracht, das sich teilweise in einen Bereich erstreckt, in dem die Höhe des Hohllichtleiters 88 vermindert ist. Der Raum in dem Gehäuse 80, der sich durch diese sich vermindernde Höhe des Hohllichtleiters zu der von der Lampe 98 abgewandten Seite ergibt, wird also in vorteilhafter Weise dafür benutzt, um das Vorschaltgerät 100, oder allgemeiner elektrische und/oder mechanische Komponenten unterzubringen, so daß insgesamt eine geringere Bauhöhe erreicht werden kann. Von diesem Konzept kann selbstverständlich auch bei den anderen vorangehend beschriebenen Ausführungsformen Gebrauch gemacht werden. Beispielsweise kann bei dem Ausführungsbeispiel gemäß Fig. 5 ein Vorschaltgerät im Bereich des waagrechten Dachwandabschnitts 40b angebracht sein.

Fig. 11 zeigt eine Abwandlung des Ausführungsbeispiels gemäß Fig. 10, diesmal für das Beispiel einer Pendelleuchte. Gleiche Bauelemente wie in Fig. 10 sind mit den gleichen Bezugszeichen versehen und werden nicht noch einmal beschrieben. Bei der Ausführungsform gemäß Fig. 11 ist eine Dachwand 110 als Begrenzung des Hohlraums 90 vorgesehen, welche, anders als bei dem Ausführungsbeispiel gemäß Fig. 10, vom Hohlraum 90 aus gesehen, nicht konvex, sondern konkav gekrümmt ist. Auch bei dieser Ausführungsform verringert sich die Höhe des Hohlraums 90 in der Richtung von der Lampe 98 zum radial äußeren Rand. Bei dieser Ausführungsform entfallen die Seitenwände 96, da die Dachwand 110 direkt auf dem Niveau der dem Hohlraum 90 zugewandten Seite der Platte 18 abschließt.

Elemente und Prinzipien der verschiedenen vorangehend beschriebenen Ausführungsformen lassen sich selbstverständlich kombinieren. Beispielsweise können, wie vorangehend erwähnt, auch bei den Ausführungsbeispielen gemäß Fig. 1 bis 9 elektrische oder mechanische Komponenten ganz oder teilweise in einem Bereich zwischen der Dachwand des Hohllichtleiters und der Gehäusewand untergebracht sein, in welchem die Höhe des Hohllichtleiters vermindert ist, um so eine geringere Bauhöhe zu erreichen. Konvex, konkav oder andersartig gekrümmte Dachwände können selbstverständlich auch als Dachwand oder Dachwandabschnitt bei den Ausführungsbeispielen gemäß Fig. 1 bis 9 verwendet werden, ebenso wie bei den Ausführungsbeispielen gemäß Fig. 10 und 11 auch Dachwände oder Dachwandabschnitte verwendet werden können, die in einem radialen Querschnitt gerade und geneigt sind. Ebenso kann die Dachwand beliebige Kombinationen von ebenen geneigten Abschnitten, zu der Lichtauskoppelfläche parallelen ebenen Abschnitten und konvex oder konkav gekrümmten Abschnitten enthalten, solange der Abstand der Dachwand von der Lichtauskoppelfläche, ausgehend von der Lichteinkoppelstelle, zumindest über einen Teilabschnitt abnimmt. Abweichend von den vorangehend beschriebenen Ausführungsformen kann auch vorgesehen sein, daß die Dachwand des Hohllichtleiters eben und im Betriebszustand waagrecht ist, während die Prismenplatten der Lichtauskoppeleinrichtung zu der Dachwand geneigt oder gekrümmt sind.

Die für die einzelnen Ausführungsbeispiele jeweils gewählten Leuchtenformen sind vollständig beispielhaft und sollen lediglich beispielhaft mögliche Anwendungsgebiete der Erfindung illustrieren. Erfindungsgemäße Leuchten können als Rundleuchten, Downlights, Anbauleuchten, Einbauleuchten oder Pendelleuchten ausgeführt sein, um einige Beispiele zu nennen.

Statt der Lampen, die mit Bezug auf die vorangehend beschriebenen Ausführungsbeispiele erwähnt wurden, können auch andersartige Lichtquellen, z.B. Kompaktleuchtstofflampen, Hochdrucklampen, Halogenglühlampen, Leuchtdioden, photolumineszente Folien oder dgl., verwendet werden.

Wenn eine Lampe oder eine andere Lichtquelle ganz oder teilweise in dem Hohlraum des Hohllichtleiters aufgenommen ist, muß die Lampenachse bzw. die Längsachse der Lichtquelle nicht notwendigerweise senkrecht auf der Lichtauskoppeleinrichtung, z.B. den Prismenplatten 18 oder 20, stehen. Es kann auch vorgesehen sein, daß die Lampenachse bzw. die Längsachse der Lichtquelle parallel zu der Lichtauskoppeleinrichtung oder in einem Winkel kleiner als 90° zu dieser geneigt ist.

Je nach den lichttechnischen Anforderungen an die Abschirmung kann anstelle von zwei Prismenplatten mit zwei zueinander senkrecht stehenden Prismenstrukturen auch eine andere Anzahl von Prismenplatten verwendet werden.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

Bezugszeichenliste

| | |
|---|---|
| 1 | Gehäuse |
| 3 | Lichtaustrittsfläche |
| 10 | Hohllichtleiter |
| 12 | Hohlraum |
| 14 | Dachwand |
| 14a, 14b | Wandabschnitt |
| 16 | Lichtauskoppeleinrichtung |
| 18 | Prismenplatte |
| 20 | Prismenplatte |
| 22 | Ringlampe |
| 24 | Einkoppelreflektor |
| 30 | Prisma |
| 32, 32a, 32b | Prismengrat |
| 34, 34a, 34b | Vertiefung |
| 36 | Prisma |
| 38 | Prismengrat |
| 39 | ebener Zwischenbereich |
| 40 | Dachwand |
| 40a, 40b | Abschnitte der Dachwand |
| 42 | Vorschaltgerät |
| 50 | Hohllichtleiter |
| 52 | Hohlraum |
| 54 | Dachwand |
| 56 | Seitenwand |
| 58 | Lichtauskoppeleinrichtung |
| 60 | Ringlampe |
| 62 | Einkoppelreflektor |
| 64 | Abdeckung |
| 70 | Hohllichtleiter |
| 72 | Dachwand |
| 72a, 72b | Dachwandabschnitt |
| 74 | Lichtauskoppeleinrichtung |
| 76 | oberer Reflektor |
| 78 | unterer Reflektor |
| 80 | Gehäuse |
| 82 | Einbauring |
| 84 | Befestigungseinrichtung |
| 86 | Decke |
| 88 | Hohllichtleiter |
| 90 | Hohlraum |
| 92 | Dachwand |
| 94 | Lichtauskoppeleinrichtung |

| 96  | Seitenwand |
|-----|------------|
| 98  | Lampe |
| 100 | Vorschaltgerät |
| 110 | Dachwand |

**Patentansprüche**

1. Leuchte zur Beleuchtung von Innenräumen mit einem nicht viereckigen Gehäuse (1; 80) und/oder einer nicht viereckigen Lichtaustrittsfläche (3), insbesondere Rundleuchte oder Downlight, welche einen oder mehrere Hohllichtleiter (10; 50; 70; 88) mit einem Hohlraum (12; 52; 90) aufweist, in den Licht einer oder mehrerer Lichtquellen (22; 60; 98) eingestrahlt wird und aus dem Licht über mindestens eine Lichtauskoppeleinrichtung (16; 58; 74; 94) zum Austritt an einer Lichtaustrittsfläche (3) der Leuchte ausgekoppelt wird, wobei die Lichtauskoppeleinrichtung aus einem lichtdurchlässigen Material besteht und eine oder mehrere Grenzflächen zwischen zwei Medien mit unterschiedlichem Brechungsindex aufweist, die mit einer lichtbrechenden Struktur (30, 36) versehen sind, wobei der Lichtauskoppeleinrichtung gegenüberliegend eine reflektierende, den Hohlraum begrenzende Wand (14; 40; 54; 72; 92; 110) vorgesehen ist, deren Abstand von den Elementen der Lichtauskoppeleinrichtung (18, 20), ausgehend von der Stelle einer Lichteinkopplung zumindest über einen Teilabschnitt abnimmt, wobei die lichtbrechende Struktur bzw. Strukturen (30, 36) in einer oder mehreren Flächen senkrecht zu der Lichtaustrittsfläche (3) der Leuchte eine Lichtauskopplung oberhalb eines Grenzwinkels zu einer Senkrechten zu der Lichtaustrittsfläche (3) im wesentlichen verhindern und dadurch eine Abschirmung, bezogen auf diese Fläche bzw. Flächen, erzeugen, wobei eine Lichtquelle (98) zumindest teilweise in dem Hohlraum (90) aufgenommen ist.

2. Leuchte nach Anspruch 1, **dadurch gekennzeichnet, daß** zumindest eine lichtbrechende Struktur linienförmige lichtbrechende Strukturelemente (30, 36) aufweist, welche Seitenwände im wesentlichen parallel zu der Linienrichtung aufweisen, die an dem freien Ende der Strukturelemente einen Winkel (w) einschließen, der größer als 90° ist.

3. Leuchte nach Anspruch 1 oder 2, **dadurch gekennzeichnet, daß** zumindest eine lichtbrechende Struktur linienförmige lichtbrechende Strukturelemente (30, 36) aufweist, bei denen die Linie, welcher die Strukturelemente (30, 36) folgen, konform zu der Umfangslinie der Lichtaustrittsfläche ist.

4. Leuchte nach Anspruch 2 oder 3, **dadurch gekennzeichnet, daß** zumindest eine Struktur mit kreisförmigen lichtbrechenden Strukturelementen (30) ausgebildet ist.

5. Leuchte nach einem der Ansprüche 1 bis 4, **dadurch gekennzeichnet, daß** zumindest zwei lichtbrechende Strukturen (30, 36) mit linienförmigen Strukturelementen vorgesehen sind, wobei die Linien, welche die Geometrie der ersten Struktur (30) definieren, mit den Linien, welche die Geometrie der zweiten Struktur (36) definieren, einen nicht verschwindenden Winkel einschließen.

6. Leuchte nach einem der Ansprüche 1 bis 5, **dadurch gekennzeichnet, daß** Licht von einer oder mehreren Lichtquellen (22; 60) von der radialen Außenseite des Hohlraums (12) aus eingekoppelt wird.

7. Leuchte nach einem der Ansprüche 1 bis 6, **dadurch gekennzeichnet, daß** der Hohllichtleiter (50) einen radial inneren Rand besitzt und eine oder mehrere Lichtquellen (60) entlang des radial inneren Rands angeordnet sind.

8. Leuchte nach Anspruch 7, **dadurch gekennzeichnet, daß** an einen inneren radialen Rand eines ersten Hohllichtleiters (50) anschließend ein zweiter, konzentrischer Hohllichtleiter (70) vorgesehen ist, wobei eine oder mehrere Lichtquellen (60) zwischen dem inneren radialen Rand des ersten Hohllichtleiters (50) und dem äußeren radialen Rand des zweiten Hohllichtleiters (70) angeordnet sind.

9. Leuchte nach einem der Ansprüche 1 bis 8, **dadurch gekennzeichnet, daß** eine Lichtquelle sich durch eine Öffnung in einer Wand des Hohllichtleiters (92; 110) in den Hohlraum (90) des Hohllichtleiters (80) erstreckt.

10. Leuchte nach einem Ansprüche 1 bis 9, **dadurch gekennzeichnet, daß** ein oder mehrere elektrische und/oder mechanische Komponenten (100) außerhalb des Hohllichtleiters (92; 110) angeordnet sind, die sich zumindest teilweise in einen Abschnitt eines Raumbereichs außerhalb des Hohllichtleiters (92; 110) erstrecken, in dem die besagte Wand des Hohllichtleiters (92; 110) einen gegenüber einer Lichteinkoppelstelle verringerten Abstand von der Lichtauskoppeleinrichtung (94) besitzt und der zwischen der Lichtauskoppeleinrichtung (94) und einer Ebene liegt, deren Abstand von der Lichtauskoppeleinrichtung (94) dem maximalen Abstand der besagten Wand (92; 110) von der Lichtauskoppeleinrichtung (94) entspricht.

11. Leuchte nach einem der Ansprüche 1 bis 10, **dadurch gekennzeichnet, daß** eine erste Lichtauskoppeleinrichtung zur Abgabe eines Direktanteils des abgestrahlten Lichts und eine zweite Lichtauskoppeleinrichtung zur Abgabe eines Indirektanteils des abgestrahlten Lichts vorgesehen sind.

12. Leuchte nach Anspruch 11, **dadurch gekennzeichnet, daß** eine einer ersten Lichtauskoppeleinrichtung gegenüberliegende Wand insgesamt oder in Teilabschnitten zumindest teilweise lichtdurchlässig ausgebildet ist.

**Claims**

1. Light for the lighting of interiors with a non-rectangular housing (1; 80) and/or a non-rectangular light output surface (3), in particular a round light or downlight, which comprises one or more hollow light conductors (10; 50; 70; 88) with a cavity (12; 52; 90), into which light from one or more light sources (22; 60; 98) is radiated and from which light is coupled out by means of at least one light coupling-out device (16; 58; 74; 94) to emerge on a light output surface (3) of the light, wherein the light output coupling device consists of a light-permeable material and comprises one or more boundary surfaces between two media with different refractive indices, which are provided with a light-refracting structure (30, 36), wherein the light output coupling device is provided opposite a reflecting wall (14; 40; 54; 72; 92; 110) delimiting the cavity, the distance of which from the elements of the light output coupling device (18, 20) decreases over at least a part segment, starting out from the location of a light incident point, wherein the light-refractive structure(s) (30, 36), in one or more surfaces perpendicular to the light output surface (3) of the light, essentially prevent(s) a light output coupling above a threshold angle to a perpendicular/normal to the light output surface (3), and thereby creates a screening effect relative to the surface(s), wherein a light source (98) is accommodated at least partially in the cavity (90).

2. Light according to claim 1, **characterized in that** at least one light-refractive structure comprises linear light-refractive structure elements (30, 36), which comprise side walls essentially parallel to the line direction, and which at the free end of the structure elements enclose an angle (w) which is greater than 90°.

3. Light according to claim 1 or 2, **characterized in that** at least one light-refractive structure comprises linear light-refractive structure elements (30, 36), with which the line which the structure elements (30, 36) follow conforms to the circumferential line of the light output surface.

4. Light according to claim 2 or 3, **characterized in that** at least one structure is configured with circular light-refractive structure elements (30).

5. Light according to any one of claims 1 to 4, **characterized in that** at least two light-refractive structures (30, 36) are provided with linear structure elements, wherein the lines which define the geometry of the first structure (30) enclose a non-vanishing angle with the lines which define the geometry of the second structure (36).

6. Light according to any one of claims 1 to 5, **characterized in that** light from one or more light sources (22; 60) is coupled in from the radial outside of the cavity (12).

7. Light according to any one of claims 1 to 6, **characterized in that** the hollow light conductor (50) has a radial internal edge and one or more light sources (60) are arranged along the radial inner edge.

8. Light according to claim 7, **characterized in that**, on an inner radial edge of a first hollow conductor (50), a second concentric hollow conductor (70) is provided, wherein one or more light sources (60) are arranged between the inner radial edge of the first hollow light conductor (50) and the outer radial edge of the second hollow light conductor (70).

9. Light according to any one of claims 1 to 8, **characterized in that** a light source extends through an opening in one wall of the hollow light conductor (92; 110) into the cavity (90) of the hollow light conductor (80).

10. Light according to any one of claims 1 to 9, **characterized in that** one or more electrical and/or mechanical components (100) are arranged outside the hollow light conductor (92; 110), which extend at least partially into a section of a spatial region outside the hollow light conductor (92; 110), in which the said wall of the hollow light conductor (92; 110) has a reduced distance interval from the light output coupling device (94) relative to a light incident point, and lies between the light coupling device (94) and a plane of which the distance interval from the light output coupling device (94) corresponds to the maximum distance interval of the said wall (92; 110) from the light output coupling device (94).

11. Light according to any one of claims 1 to 10, **characterized in that** a first light output coupling device is provided such as to emit a direct portion of the radiated light, and a second light output coupling device is provided such as to emit an indirect portion of the radiated light.

12. Light according to claim 11, **characterized in that** a wall opposite a first light output coupling device is configured entirely or in part sections as being at least partially light permeable.

**Revendications**

1. Luminaire pour l'éclairage d'espaces intérieurs avec un boîtier non rectangulaire (1 ; 80) et/ou une surface de sortie de lumière non rectangulaire (3), plus particulièrement un luminaire rond ou un « downlight », qui comprend une ou plusieurs fibres optiques creuses (10 ; 50 ; 70 ; 88) avec un espace vide (12 ; 52 ; 90) dans lequel de la lumière d'une ou de plusieurs sources de lumière (22 ; 60 ; 98) est introduite et hors duquel de la lumière sort du luminaire par l'intermédiaire d'au moins un dispositif de sortie de lumière (16 ; 58 ; 74 ; 94) pour la sortie au niveau d'une surface de sortie de lumière (3) du luminaire, le dispositif de sortie de lumière étant constitué d'un matériau transparent et comprenant une ou plusieurs surfaces limites entre deux milieux avec différents indices de réfraction, qui sont munies d'une structure réfringente (30, 36), une paroi (14 ; 40 ; 54 ; 72 ; 92 ; 110) réfléchissante limitant l'espace vide étant prévue en face du dispositif de sortie de lumière, dont la distance par rapport aux éléments du dispositif de sortie de lumière (18, 20) diminue à partir de l'endroit d'une entrée de lumière au moins sur une portion, la structure ou les structures réfringentes (30, 36) empêchant, dans une ou plusieurs surfaces perpendiculaires à la surface de sortie de lumière (3) du luminaire, une sortie de lumière au-delà d'un angle limite par rapport à une perpendiculaire à la surface de sortie de lumière (3) et générant ainsi une protection par rapport à cette surface ou à ces surfaces, une source de lumière (98) étant logée au moins partiellement dans l'espace vide (90).

2. Luminaire selon la revendication 1, **caractérisée en ce qu'**au moins une structure réfringente comprend des éléments structurels réfringents linéaires (30, 36) qui comprennent des parois latérales globalement parallèles à la direction des lignes, qui forment à l'extrémité libre des éléments structurels, un angle (w) supérieur à 90°.

3. Luminaire selon la revendication 1 ou 2, **caractérisé en ce qu'**au moins une structure réfringente comprend des éléments structurels réfringents linéiares (30, 36), la ligne que suivent les éléments structurels (30, 36) étant conforme à la ligne de circonférence de la surface de sortie de lumière.

4. Luminaire selon la revendication 2 ou 3, **caractérisé en ce qu'**au moins une structure avec des éléments structurels réfringents circulaires (30).

5. Luminaire selon l'une des revendications 1 à 4, **caractérisé en ce qu'**au moins deux structures réfringentes (30, 36) sont munies d'éléments structurels linéaires, les lignes qui définissent la géométrie de la première structure (30) formant, avec les lignes, qui définissent la géométrie de la deuxième structure (36), un angle non nul.

6. Luminaire selon l'une des revendications 1 à 5, **caractérisé en ce que** la lumière provenant d'une ou plusieurs sources de lumière (22 ; 60) est introduite par le côté extérieur radial de l'espace vide (12).

7. Luminaire selon l'une des revendications 1 à 6, **caractérisé en ce que** la fibre optique creuse (50) comprend un bord interne radial et une ou plusieurs sources de lumière (60) sont disposées le long du bord interne radial.

8. Luminaire selon la revendication 7, **caractérisé en ce que**, le bord radial interne d'une première fibre optique creuse (50) est prolongé par une deuxième fibre optique creuse (70) concentrique, une ou plusieurs sources de lumière (60) étant disposées entre le bord radial interne de la première fibre optique creuse (50) et le bord radial externe de la deuxième fibre optique creuse (70).

9. Luminaire selon l'une des revendications 1 à 8, **caractérisé en ce qu'**une source de lumière s'étend à travers une ouverture dans une paroi de la fibre optique creuse (92 ; 110) dans l'espace vide (90) de la fibre optique creuse (80).

10. Luminaire selon l'une des revendications 1 à 9, **caractérisé en ce qu'**un ou plusieurs composants électriques et/ou mécaniques (100) sont disposés à l'extérieur de la fibre optique creuse (92 ; 110), qui s'étendent au moins partiellement dans une portion d'une zone à l'extérieur de la fibre optique creuse (92 ; 110), dans laquelle ladite paroi de la fibre optique creuse (92 ; 110) présente, en face d'un point d'introduction de lumière, une distance réduite par rapport au dispositif de sortie de lumière (94) et se trouve dans un plan dont la distance par rapport au dispositif de sortie de lumière (94) correspond à la distance maximale de ladite paroi (92 ; 110) par rapport au dispositif de sortie de lumière (94).

11. Luminaire selon l'une des revendications 1 à 10, **caractérisé en ce qu'**un premier dispositif de sortie de lumière est prévu pour l'émission d'une part directe de la lumière émise et un deuxième dispositif de sortie de lumière est prévu pour l'émission d'une part indirecte de la lumière émise.

12. Luminaire selon la revendication 11, **caractérisé en ce qu'**une paroi opposée à un premier dispositif de sortie de lumière est conçue est conçue dans son intégralité ou uniquement sur certaines portions de manière au moins partiellement transparente.

**Fig.1**

Fig. 2

Fig. 3

Fig. 4

Fig. 5

Fig. 6

50 54 52 60

56 62

58 20 18

60 64

50

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5863114 A
- WO 0011399 A
- EP 0496921 A1
- US 5046805 A
- EP 1120600 A1